# EUROPEAN PATENT APPLICATION

(11) **EP 4 672 562 A1**
(43) Date of publication of application: **31.12.2025**
(21) Application number: 24183901.8
(22) Date of filing: 24.06.2024
(51) Int. Cl.: H02K 1/32, H02K 3/24, H02K 3/52, H02K 11/25

(54) **AN ELECTRIC MOTOR**

(71) Applicant: Aurobay Sweden AB, 417 55 Göteborg (SE)
(72) Inventor: OLSSON, Jan-Ola, 437 93 Lindome (SE); BOVO, Mirko, 422 43 Hisings Backa (SE)
(74) Representative: Zacco Sweden AB

(57) **Abstract**

An electric motor (1) comprising a rotor (2) for rotation about an axis of rotation (A) and a stator (3). The rotor (2) comprising a rotor core (14) and rotor windings (15;16). The rotor (2) further comprising cooling channels (6) for a cooling liquid, each cooling channel (6) comprising an inlet end (7) and an outlet end (8). The outlet end (8) is provided further away from the axis of rotation (A) relative to the inlet end (7). Each cooling channel (6) comprising an intermediate portion (10) connecting the inlet end (7) and the outlet end (8), the intermediate portion (10) extending in a longitudinal direction of the axis of rotation (A). Each cooling channel (6) is liquid tight and separate from the rotor core (14) and the intermediate portion (10) is provided adjacent a rotor winding (15;16).

## Description

### Field of the invention

The invention relates to electric motors, and more specifically to cooling of an electric motor comprising a rotor and a stator.

### Background of the invention

Electric motors, also known as e-machines, comprise a rotor and a stator. A type of electric motor comprises a rotor comprising rotor windings wound around a rotor core. Such rotors differ from rotors with permanent magnets in several ways, and a common feature for rotor windings is high thermal loads to the rotor. An example of an electric motor comprising rotor windings is an Externally Excited Synchronous Machine (EESM). Another example of an electric motor comprising a rotor with rotor windings is an asynchronous machine, also known as a squirrel-cage induction motor. This electric motor has a squirrel-cage rotor with aluminum or copper conductors embedded in the surface. Other electric motors comprising rotor windings may comprise DC machines and AC machines of various phases, such as single phase, 3 phase or multiphase.

The rotor core of a rotor comprising rotor windings is commonly made from lamination stacks, typically made from thin sheets of metal alloys that can be easily magnetized and demagnetized with limited eddy current loss. The lamination stacks are formed from laminations bound together. Both the rotor and the stator generate heat, and if the temperature is kept low, the electric motor may achieve higher specific power. This is especially true for operation at high power output for a prolonged period of time during continuous operation. The windings of the rotor are commonly associated with high heat load, and also the end windings of the stator is a particularly high heat load location. However, these areas of the electric motor are not easily accessible, and effective cooling of these areas has been proven difficult. Cooling of the stator can be achieved with a combination of a water-based coolant jacket and/or direct oil cooling.

Cooling of the rotor brings an increased level of complexity, being it a rotating part. Solutions exist to feed the rotor axle with coolant or oil. The cooling liquid is then led through the center of the rotor, but not directly adjacent the heat source. Cooling through the axle is therefore relatively inefficient. Designing a solution with completely water-tight sealing for a shaft rotating at high RPM is a further challenge. In the case of oil cooling, some leakage can be tolerated, as oil is compatible with the electromagnetic field. However, with other cooling liquids, such as water and water based cooling liquids, a completely sealed cooling channel is required.

A further method to cool the stator ends is to use the convection generated by air motion driven by the rotor. Fan-like blades can be attached to the rotor ends to increase this effect. However, a problem with such cooling is the decreased efficiency, and a key attribute of electric motors is high efficiency. For this reason, jets from stationary nozzles are not used to cool the rotating shaft since they will generate high losses.

There are a number of limitations related to existing solutions for cooling the rotor. Water cooling requires a complete seal of rotating component with inlet and outlet, and it is not possible to reach the vicinity of the heat source, i.e. the rotor windings. With oil cooling, minor leakage is allowed, however, a laminate stack is a poor medium for a cooling channel, as leakage through the laminate stack will occur, leading to oil leakage in the rotor-stator gap, and consequently high efficiency loss. Cooling channel design may also interfere with electromagnetic and structural functionality, and it is not desirable to alter the design of a laminate stack as changes to the laminate stack design will affect the efficiency of the e-machine.

There is therefore a need for an improved electric motor to reduce or eliminate the above mentioned disadvantages of known techniques. It is an objective of the invention to achieve this and to provide further advantages over the state of the art.

### Summary of the invention

It is an object of the invention to mitigate, alleviate or eliminate one or more of the above-identified deficiencies and disadvantages in the prior art and solve at least the above mentioned problem.

According to a first aspect, there is provided an electric motor comprising a rotor for rotation about an axis of rotation and a stator. The rotor comprising a rotor core and rotor windings. The rotor further comprising cooling channels for a cooling liquid, each cooling channel comprising an inlet end and an outlet end. The outlet end is provided further away from the axis of rotation relative to the inlet end. Each cooling channel comprising an intermediate portion connecting the inlet end and the outlet end, the intermediate portion extending in a longitudinal direction of the axis of rotation. Each cooling channel is liquid tight and separate from the rotor core and the intermediate portion is provided adjacent a rotor winding. The intermediate portion being provided adjacent a rotor winding ensures cooling of the most heat-intensive part of the rotor, the rotor windings. Liquid tight cooling channels allows the rotor core to be glued with less accuracy and further allows utilization of other cooling liquids than oil. As the cooling channels are liquid tight, there is zero risk of leakage e.g. between rotor laminates. Cooling channels arranged separate from the rotor core does not impact the electromagnetic or structural design of the rotor core.

According to an embodiment, the intermediate portion of each cooling channel is arranged in a space provided in between two neighboring rotor windings. The cooling channels thus occupies otherwise free space in the rotor usually filled with epoxy to hold the windings solidly in place, and does not extend beyond the outer radius of the rotor.

According to an embodiment, the inlet end is connected to an axel channel extending longitudinally through an axel of the rotor.
The cooling liquid is thus easily guided from the axel of the rotor, through the cooling channel intermediate portion and out through the outlet end.

According to an embodiment, the intermediate portion is inclined relative to the axis of rotation. The centrifugal force thus ensures a continuous flow of cooling liquid through the cooling channels.

According to an embodiment, at least the intermediate portion is formed from a metal tube. This ensures optimal thermal conductivity between the rotor windings and the cooling liquid.

According to an embodiment, at least the intermediate portion of each cooling channel is provided in a wedge element provided between neighboring rotor windings. The cooling channels can thus easily be inserted into the rotor upon assembly of the rotor, and the wedge element may provide sufficient clamping force to keep the rotor windings in place in the rotor.

According to an embodiment, the wedge element comprises a V-shaped element.

According to an embodiment, each cooling channel comprises two intermediate portions connecting one inlet end to two outlet ends. A cooling channel can thus be provided adjacent two neighboring rotor windings, and efficiently cool the two rotor windings, and easily be supplied with cooling liquid through one single inlet end.

According to an embodiment, the inlet end is provided at a first longitudinal end of the rotor and the outlet end is provided at a second longitudinal end thereof. The cooling channel thus extends along the length of the rotor and maximum cooling efficiency is achieved.

According to an embodiment, the rotor further comprises reversed cooling channels, wherein the inlet ends of the reversed cooling channels are provided at the second longitudinal end of the rotor and the outlet ends are provided at the first longitudinal end. The cooling channels and the reversed cooling channels are provided alternating in between neighboring rotor windings about an axis of rotation of the rotor. The rotor may thus be designed symmetrical and hence more balanced when comprising reversed cooling channels. Further, the reversed cooling channels ensure cooling of both longitudinal ends of the stator end-windings.

According to an embodiment, the electric motor further comprises a stationary temperature sensor, for measuring a temperature of the cooling liquid from the outlet end of the cooling channels and estimating a temperature of the rotor. The temperature sensor is made wet by the cooling liquid exiting the rotor, and the temperature of the rotor can be accurately estimated.

### Brief description of the figures

The aspects of the invention, including its particular features and advantages, will be readily understood from the following detailed description and the accompanying figures. The figures are provided to illustrate the general structures of the invention. Like reference numerals refer to like elements throughout.
Figure 1 shows a half cross section in a radial direction of a first embodiment of an electric motor comprising a rotor and a stator. The rotor comprises cooling channels extending in a longitudinal direction.
Figure 2 shows a half cross section in a radial direction of a second embodiment of an electric motor comprising a rotor and a stator. The rotor comprises inclined cooling channels extending in a longitudinal direction.
Figure 3 shows a quarter of a cross section in a longitudinal direction of an embodiment of an electric motor comprising a rotor and a stator. Cooling channels are provided in between neighboring rotor windings.
Figures 4a-4b show details of cross sections in a longitudinal direction of an embodiment of a rotor. Cooling channels are provided in between neighboring rotor windings.

### Detailed description of the invention

The invention will now be described with reference to the accompanying figures, in which preferred example embodiments of the invention are shown. The invention may, however, be embodied in other forms and should not be construed as limited to the herein disclosed embodiments. The disclosed embodiments are provided to fully convey the scope of the invention to the skilled person.

It is to be understood that the terminology used herein is for purpose of describing particular embodiments only, and is not intended to be limiting. It should be noted that, as used in the specification and the appended claims, the articles "a", "an" and "the" are intended to mean that there are one or more of the elements or steps unless the context explicitly dictates otherwise. Thus, for example, reference to "a unit" or "the unit" may include several devices, and the like. Furthermore, the words "comprising", "including", "containing" and similar wordings does not exclude other elements or steps.

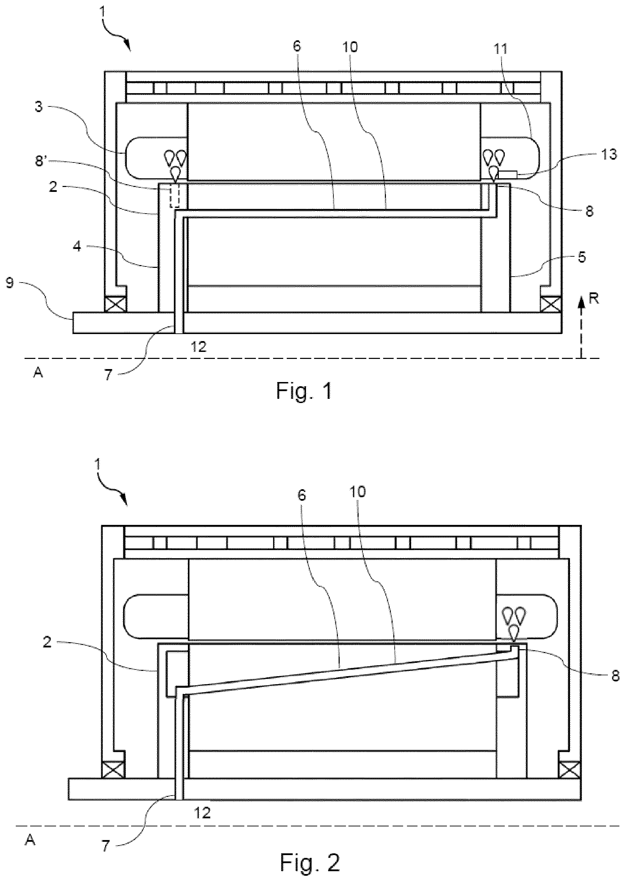

Referring initially to figure 1, a first embodiment of an electric motor 1 is shown. The electric motor 1 comprises a rotor 2 and a stator 3. The rotor 2 is configured to rotate about an axis of rotation A. The rotor 2 comprises a first longitudinal end 4 and a second longitudinal end 5. The first and second longitudinal ends 4,5 are provided at opposite longitudinal ends of the rotor 2 along the axis of rotation A. The first and second longitudinal ends 4,5 may comprise endplates or similar elements, defining the outer longitudinal ends of the rotor 2. Alternatively, if the rotor 2 does not comprise endplates, the first and second longitudinal ends 4,5 may simply be a portion of the rotor at the respective ends along the axis of rotation A.

The rotor 2 comprises cooling channels 6 for a cooling liquid. In figure 1, a cooling channel 6 extends in a longitudinal direction of the rotor 2, from the first longitudinal end 4 to the second longitudinal end 5. Each cooling channel 6 is connected to an inlet end 7 and an outlet end 8. The inlet end 7 may be provided at the first longitudinal end 4, and is configured for receiving cooling liquid to the cooling channel 2. The inlet end 7 may be provided at an axel 9, but may in other embodiments be provided spaced apart from the axel 9. The outlet end 8 may be provided at the second longitudinal end 5, and is configured for exiting cooling liquid from the cooling channel 2. The outlet end 8 is provided further from the axis of rotation A in a radial direction R than the inlet end 7. The cooling liquid is therefore forced through the cooling channels 6 by means of the centrifugal force as the rotor 2 rotates, and the cooling liquid may thus be efficiently led through the rotor 2 in a longitudinal direction. The cooling channels 6 are liquid tight, such that no liquid may enter or escape a cooling channel 6 except from at the inlet end 7 and the outlet end 8.

A cooling channel 6 further comprises an intermediate portion 10. The intermediate portion 10 connects the inlet end 7 to the outlet end 8. The intermediate portion 10 extends in a longitudinal direction of the rotor 2 and extends in the first embodiment parallel to the axis of rotation A of the rotor 2. The intermediate portion 10 may not be arranged in a straight line, but may also comprise bends and turns to increase the length of the intermediate portion 10 and cooling channel 6. As the outlet end 8 is provided further from the axis of rotation A, the centrifugal force drives the cooling liquid through the cooling channel 6 from the inlet end 7 to the outlet end 8 as the rotor 2 rotates about the axis of rotation A. The cooling liquid escapes the cooling channel 6 at the outlet end 8, and the outlet end 8 may further be configured to guide the cooling liquid towards the stator 3. More particularly, the outlet end 8 may be configured to guide the cooling liquid towards the stator ends 11. In a preferred embodiment, the outlet end 8 is provided at an outer radius of the rotor 2. The outlet end 8 may be provided at an endplate of the rotor 2. Alternatively, the outlet end 8 may be provided at the extreme surface of the second longitudinal end 5.

Cooling liquid is fed to the cooling channels 6 through inlet ends 7, through the intermediate portions 10, and escape the cooling channels 6 at the outlet ends 8. The inlet end 7 may be connected to an axel channel 12 extending longitudinally through the axel 9. The axel channel 12 is configured for flowing a cooling liquid. The cooling channels 6 may as such extend from the axel channel 12 to the outlet end 8. An axel channel 12 through which cooling liquid is flown is provided far from the rotor windings, being the main heat source. To provide the cooling liquid closer to the heat source, the cooling liquid is guided from the axel channel 12 by the inlet 7. The cooling liquid is fed from the axel channel 12 through the inlet 7 to the intermediate portion 10. The axel channel 12 may in one embodiment be blocked, such that the cooling liquid is prevented from flowing through the rotor 2, and all the cooling liquid is thus forced into the inlet 7. Alternatively, the axel channel may extend through the rotor 2, such that only a portion of the cooling liquid flowing through the axel channel 12 is fed to the inlet 7. As the cooling liquid escapes the cooling channel 6 at the outlet end 8, the cooling liquid is applied to the inside of the stator 3. The cooling liquid may thus further serve to cool the stator 3. The cooling liquid may preferably be oil, or a liquid with similar properties. As the cooling channels 6 are liquid tight, the cooling liquid may be precisely distributed at the outlet end 8 to predetermined locations at e.g. the stator 3.

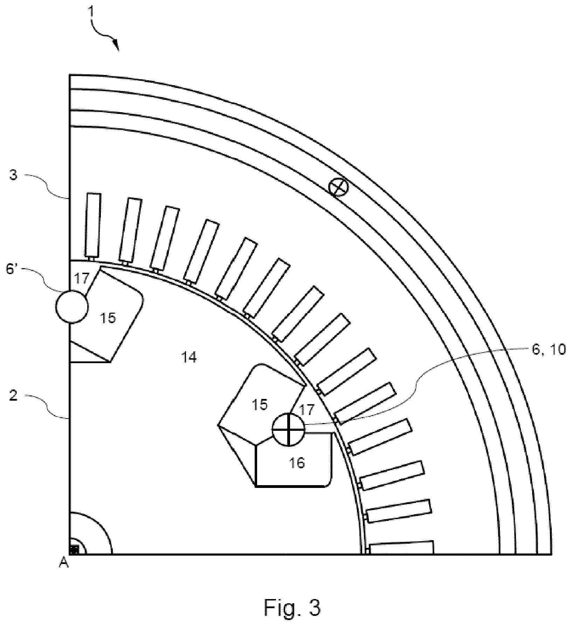

One illustrated cooling channel 6 of figure 1 comprises an inlet end 7 provided at the first longitudinal end 4, and an outlet end 8 provided at the second longitudinal end 5. The rotor 2 may in addition comprise reversed cooling channels. A reversed cooling channel is not shown in figure 1, but the outlet end 8' of a reversed cooling channel is shown. The reversed cooling channels comprise inlet ends provided at the second longitudinal end 5 of the rotor 2, and outlet ends 8' provided at the first longitudinal end 4 of the rotor 2. The reversed cooling channels may thus be similar to the cooling channels 6, but oriented reversely along the axis of rotation A in the rotor 2. The reversed cooling channels thereby accommodate a flow of cooling liquid in an opposite direction through the rotor 2 along the axis of rotation A. The reversed cooling channels are described further with reference to figure 3.

A temperature sensor 13 may advantageously be provided on the electric motor 1. More preferably, the temperature sensor 13 may be provided on the stator 3, to measure the temperature of the cooling liquid leaving the rotor 2. This measurement can be used as a proxy measure or to predict the temperature of the rotor 2. If the rotor 2 approaches it's temperature limit, the electric motor 1 may be derated to prevent failure. The temperature sensor 13 may be provided on a side of the stator 3 facing the rotor 2, and preferably adjacent the outlet end 8, such that the temperature of the cooling liquid from the rotor 2 is measured immediately before the cooling liquid reaches the stator 3 and temperature sensor 13. The temperature sensor 13 is in the illustrated embodiment provided on the stator 3 adjacent the second longitudinal end 5 of the rotor 2. The electric motor 1 may further comprise a temperature sensor provided at the first longitudinal end 4 of the rotor 2, for measuring the temperature of the cooling liquid from the outlet end 8' of a reversed cooling channel.

Referring to figure 2, a second embodiment of an electric motor 1 is shown. The electric motor 1 is similar to the electric motor described with reference to figure 1, but the intermediate portion 10 of the cooling channels 6 is in the second embodiment inclined relative to the axis of rotation A from the inlet end 7 to the outlet end 8. In the illustrated embodiment, the inclination of the intermediate portion 10 is outwards, relative to the axis of rotation A, from the inlet end 7 to the outlet end 8. This ensures a steady flow of cooling liquid through the cooling channels 6. If the electric motor 1 comprises reversed cooling channels, the reversed cooling channels may correspondingly comprise an inclined intermediate portion 10. In general, and preferably, the reversed cooling channels are oriented opposite to the cooling channels 6, but are otherwise identical, to accommodate a balanced rotor 2. Alternatively, the intermediate portion 10 could comprise an inwardly inclined part from the inlet end 7 to the outlet end 8. A part of the intermediate portion 10 would thus slope towards the axis of rotation A in a direction from the inlet end 7 to the outlet end 8, resulting in flooding of the cooling channels 6 and a prolonged oil residence time.

Referring to figure 3, a quarter of a cross section in a longitudinal direction of the electric motor 1 comprising a rotor 2 and a stator 3 is shown. The rotor 2 comprises a rotor core 14 and rotor windings 15,16. In figure 3, the rotor winding 15 is wound around a portion of the rotor core 14, and the other rotor winding 16 is wound around another portion of the rotor core 14. The rotor windings 15,16 are thus neighboring rotor windings. In between two neighboring rotor windings 15,16 is a space 17. As a skilled person will appreciate, a rotor 2 comprises several rotor windings 15,16 arranged around portions of the rotor core 14, distributed around the axis of rotation A.

The intermediate portion 10 of a cooling channel 6 is provided adjacent the rotor windings 15,16, in the space 17 where two neighboring rotor windings 15,16 meet. In the illustrated embodiment, the intermediate portion 10 is positioned directly in between the neighboring rotor windings 15,16. The rotor 2 of figure 3 also comprises reversed cooling channels 6'. As illustrated, the cooling channels 6 and reversed cooling channels 6' are provided alternating in between neighboring rotor windings 15,16, about the axis of revolution A. In figure 3, the cooling liquid in the cooling channel 6 flows into the plane of the cross section, while the cooling liquid in the reversed cooling channel 6' flows out of the plane of the cross section. A rotor 2 preferably comprises the same number of cooling channels 6 as reversed cooling channels 6'.

A wedge element may be inserted in the space 17 between two neighboring rotor windings 15,16, to keep the rotor windings 15,16 in place. The space 17 may have a shape corresponding to a triangle, and the wedge element may be shaped similarly. The cooling channels 6 may form part of such a wedge element. The wedge element may comprise a matrix material, and the cooling channels 6 may be cast or embedded in the wedge element. The cooling channels 6 may preferably be metal tubes, to increase the conductivity between the cooling liquid and the rotor windings 15,16. The cooling channels 6 are separate from the rotor core 14, and may be provided on the rotor 2 after the rotor windings 15,16 have been wound. The cooling channels 6 may be glued or fixed by an adhesive between the rotor windings 15,16. The cooling channels 6 may be fixed to the rotor windings 15,16 by a matrix material, and may partially form an integrated part of the rotor windings 15,16 along a length of the rotor windings 15,16. As the cooling channels 6 are separate from the rotor core 14, they are not part of the rotor core design, and may not interfere with the structural design of the rotor core. The rotor core 14 may be designed for optimal efficiency, while still allowing separate cooling channels 6 to form part of the rotor 2.

The cooling channels 6 or reversed cooling channels 6' may in one embodiment generally fill the space 17 between two neighboring rotor windings 15,16. Further, a cross section of the cooling channels 6 and reversed cooling channels 6' may be formed as a triangle or similar, to be accommodated in between two neighboring rotor windings 15,16.

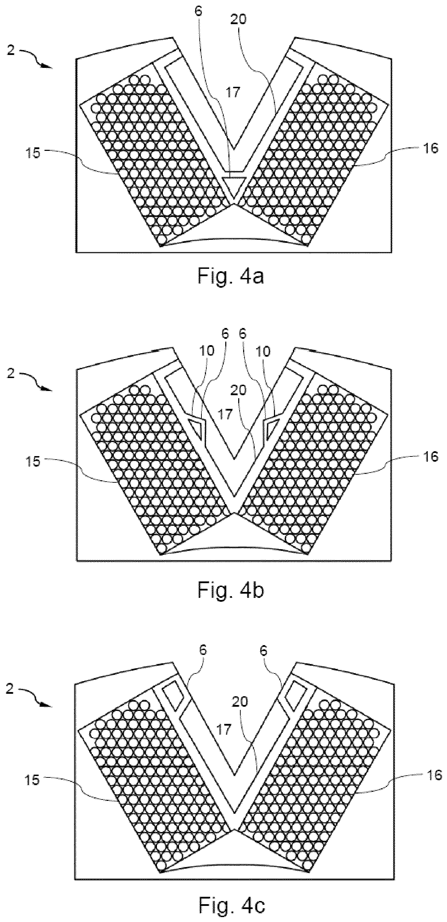

Referring to figures 4a-4c, different detail cross sections in a longitudinal direction of a rotor 2 is shown. The figures show a cross section of two neighboring rotor windings 15,16, where figure 4a is a cross section through a part of the rotor 2 approximate the first longitudinal end, i.e. approximate the inlet end. Figure 4b is a cross section through a part of the rotor 2 in between the first and second longitudinal ends, i.e. in between the inlet and outlet ends. Figure 4c is a cross section through a part of the rotor 2 approximate the second longitudinal end, i.e. approximate the outlet end.

The rotor 2 comprises a wedge element 20, provided in the space 17 between the neighboring rotor windings 15,16. The wedge element 20 extends in a longitudinal direction of the rotor 2, and comprises a cooling channel 6. In the illustrated embodiment, the cooling channel 6 comprises one inlet (not shown), and at the first longitudinal end of the rotor 2, the cooling channel 6 forms one part. However, the cooling channel 6 is split in two, and the cooling channel 6 comprises two intermediate portions 10. An intermediate portion 10 is provided in the wedge element 20 adjacent a rotor winding 15, and the other intermediate portion 10 is provided in the wedge element 20 adjacent a neighboring rotor winding 16. The intermediate portions 10 may thus be provided at opposite sides of the wedge element 20. As such, effective cooling of two neighboring rotor windings 15,16 is achieved. Each intermediate portion 10 may be connected to an outlet end, and the cooling channel 6 may thus comprise two outlet ends.

The wedge element 20 comprises in the illustrated embodiment a V-shaped element, extending in the longitudinal direction of the rotor 2. The wedge element 20 may be accommodated in between neighboring rotor windings 15,16, and ensures thermal contact between the cooling channel 6 and the rotor windings15,16. Preferably, the wedge element 20 is made from metal to maximize thermal conductivity between the cooling liquid and the rotor windings 15,16. The wedge element 20 may further be made from formed sheet metal. The wedge element 20 may be connected to the inlet and outlet ends of the cooling channel 6, or may even comprise the inlet and outlet ends.

While the invention has been described with reference to the embodiments mentioned above, it is to be understood that modifications and variations can be made without departing from the scope of the present invention, and such modifications and variations shall remain within the field and scope of the invention, as defined by the appended claims.

## Claims

1. An electric motor (1) comprising a rotor (2) for rotation about an axis of rotation (A) and a stator (3);
the rotor (2) comprising a rotor core (14) and rotor windings (15;16);
the rotor (2) further comprising cooling channels (6) for a cooling liquid, each cooling channel (6) comprising an inlet end (7) and an outlet end (8);
the outlet end (8) is provided further away from the axis of rotation (A) relative to the inlet end (7);
each cooling channel (6) comprising an intermediate portion (10) connecting the inlet end (7) and the outlet end (8), the intermediate portion (10) extending in a longitudinal direction of the axis of rotation (A);
each cooling channel (6) is liquid tight and separate from the rotor core (14) and the intermediate portion (10) is provided adjacent a rotor winding (15;16).

2. The electric motor (1) according to claim 1, wherein the intermediate portion (10) of each cooling channel (6) is arranged in a space (17) provided in between two neighboring rotor windings (15,16).

3. The electric motor (1) according to claim 1 or 2, wherein the inlet end (7) is connected to an axel channel (12) extending longitudinally through an axel (9) of the rotor (2).

4. The electric motor (1) according to any one of the preceding claims, wherein the intermediate portion (10) is inclined relative to the axis of rotation (A).

5. The electric motor (1) according to any one of the preceding claims, wherein at least the intermediate portion (10) is formed from a metal tube.

6. The electric motor (1) according to any one of the preceding claims, wherein at least the intermediate portion (10) of each cooling channel (6) is provided in a wedge element (20) provided between neighboring rotor windings (15,16).

7. The electric motor (1) according to claim 6, wherein the wedge element (20) comprises a V-shaped element.

8. The electric motor (1) according to any one of the preceding claims, wherein each cooling channel (6) comprises two intermediate portions (10) connecting one inlet end (7) to two outlet ends (8).

9. The electric motor (1) according to any one of the preceding claims, wherein the inlet end (7) is provided at a first longitudinal end (4) of the rotor (2) and the outlet end (8) is provided at a second longitudinal end (5) thereof.

10. The electric motor (1) according to claim 9, wherein the rotor (2) further comprises reversed cooling channels (6'), wherein the inlet ends of the reversed cooling channels (6') are provided at the second longitudinal end (5) of the rotor (2) and the outlet ends are provided at the first longitudinal end (4);
wherein the cooling channels (6) and the reversed cooling channels (6') are provided alternating in between neighboring rotor windings (15,16) about an axis of rotation (A) of the rotor (2).

11. The electric motor (1) according to any one of the preceding claims,
wherein the electric motor (1) further comprises a stationary temperature sensor (13) , for measuring a temperature of the cooling liquid from the outlet end (8) of the cooling channels (6) and estimating a temperature of the rotor (2).
